# EUROPÄISCHE PATENTSCHRIFT

(11) **EP 2 101 043 B1**
(45) Veröffentlichungstag und Bekanntmachung des Hinweises auf die Patenterteilung: **29.05.2013**
(21) Anmeldenummer: 08004505.7
(22) Anmeldetag: 11.03.2008
(51) Int. Cl.: F01D 15/10, F01D 19/00, F01D 21/06, F01D 25/34, F02C 7/275, F01D 25/36

(54) **Verfahren zum Aufwärmen einer Dampfturbine**
Method for warming a steam turbine
Procédé de chauffage d'une turbine à vapeur

(43) Veröffentlichungstag der Anmeldung: 16.09.2009
(73) Patentinhaber: Siemens Aktiengesellschaft, 80333 München (DE)
(72) Erfinder: Beul, Ulrich, 45149 Essen (DE); Heue, Matthias, 44879 Bochum (DE); Hofbauer, Thomas, Dr., 45478 Muelheim/Ruhr (DE); Popella, Hartmut, Dr., 49492 Westerkappeln (DE); De Lazzer, Armin, Dr., 45479 Mühlheim an der Ruhr (DE)

(56) Entgegenhaltungen:
- EP-A- 1 507 068
- WO-A-2006/084809
- WO-A-2007/140730
- DE-B- 1 024 982
- DE-C- 524 329
- JP-A- 58 005 407

## Beschreibung

Die Erfindung betrifft eine Anlage, umfassend eine Dampfturbine und eine elektrodynamische Maschine sowie ein Verfahren zum Betreiben einer Dampfturbine, wobei die Dampfturbine mit einer elektrodynamischen Maschine gekoppelt ist.

Ein Dampfkraftwerk umfasst in der Regel mehrere Teilturbinen, die in der Regel in Hochdruck-, Mitteldruck- und/oder Niederdruckteilturbinen eingeteilt werden. Zwischen der Hochdruck-und der Mitteldruckteilturbine ist in der Regel eine Zwischenüberhitzungseinheit angeordnet. Im bestimmungsgemäßen Betrieb solcher Kraftwerke sind die Temperaturen und Drücke des Dampfes derart angepasst, dass eine Gefahr für die einzelnen Komponenten der Dampfturbine minimiert ist. Insbesondere bei dem Betrieb der Dampfturbine im sogenannten Volllastbetrieb ist die Gefahr einer Beschädigung der Komponenten in der Regel gering. Allerdings existiert neben dem Volllastbetrieb auch ein Teillastbetrieb, bei dem über den an der Dampfturbine angeschlossenen Generator nicht die volle oder keine Leistung abgegriffen wird. Während solcher Teillastbetriebe kann es unter Umständen vorkommen, dass die Temperaturen am Austritt der Hochdruck-Teilturbine so hoch sind, dass eine Gefahr für die Komponenten des Dampfkreislaufs oder der Turbine besteht.

Ein weiterer Betriebszustand, bei dem ein ähnliches Problem auftritt, ist der Betrieb während des Anfahrens der Dampfturbine. Bevor eine Dampfturbine bestimmungsgemäß betrieben werden kann, muss diese behutsam aufgewärmt werden. In dieser sogenannten Aufwärmphase wird die Dampfturbine dosiert mit Dampf beaufschlagt, wobei der an der Dampfturbine angeschlossene Generator noch keine elektrische Leistung liefert, was dazu führt, dass vom Generator keine bremsende Wirkung erzeugt wird. Das Aufwärmen der Dampfturbine geschieht zunächst im nicht-synchronisierten Betrieb bei einer Anwärmdrehzahl und anschließend bei voller Drehzahl ohne Leistung, was soviel heißt, dass die Frequenz bzw. Drehzahl der Dampfturbine unterschiedlich von der Netzfrequenz von 50 bzw. 60Hz sein kann. Ein einfaches Anschließen des Generators an ein Versorgungsnetz ist somit ausgeschlossen, da die Drehzahl nicht konstant und in der Regel ungleich der Netzfrequenz ist und die Dampfturbine zunächst kontrolliert auf Nenndrehzahl beschleunigt werden muss.

Um dieses Problem zu beheben wurden bisher die Bauteile der Hochdruck-Teilturbine für entsprechend hohe Temperaturen ausgelegt, was eine vergleichsweise teure Lösung darstellt. Eine weitere Möglichkeit dieses Problem zu reduzieren besteht darin, den Turbinenregler so einzustellen, dass soviel Leistung wie möglich zur Hochdruck-Teilturbine verschoben wird, um die Temperaturen am Austritt der Hochdruck-Teilturbine durch die Kühlwirkung des durchströmenden Dampfes zu beschränken.

Wünschenswert wäre es, eine einfache und vergleichsweise kostengünstige Lösung zu haben, um das Anwärmen einer Dampfturbine zu beschleunigen und niedrigere Temperaturen am Austritt der Hochdruck-Teilturbine auch bei niedrigen Lasten realisieren zu können.

An dieser Stelle setzt die Erfindung an, deren Aufgabe es ist, ein Verfahren und eine Anlage anzugeben, mit der ein schnelles Anwärmen möglich ist.

Die auf die Anlage hin gerichtete Aufgabe wird durch eine Anlage umfassend eine Dampfturbine und eine elektrodynamische Maschine gelöst, wobei die elektrodynamische Maschine als Turnmotor zum Drehen des Rotors der Dampfturbine und als Generator zum Erzeugen einer elektrischen Leistung ausgebildet ist, wobei ein Frequenzumrichter an die elektrische Maschine angekoppelt wird. Der Frequenzumrichter ist derart ausgebildet, dass dieser die vom Asynchronmotor erzeugte elektrische Spannung in eine Spannung mit geeigneter Netzfre quenz von 50Hz bzw. 60Hz umwandelt. Eine Umwandlung in andere Netzfrequenzen ist möglich. Der Frequenzumrichter wird an Bremswiderstandsbatterien angekoppelt. Dadurch wird die in der elektrodynamischen Maschine gewonnene Leistung in der Bremswiderstandsbatterie in Wärme umgewandelt. Die Bremswiderstandsbatterien können wiederum mit Dampf gekühlt werden.

Mit der Erfindung wird somit vorgeschlagen, eine elektrodynamische Maschine vorzusehen, die im Wesentlichen zwei Funktionen aufweist. Zum einen ist die elektrodynamische Maschine als Turnmotor zum Drehen des Rotors der Dampfturbine ausgebildet. Bisher wurden hydraulische Motoren verwendet, um den Rotor einer Dampfturbine während einer Abkühlphase zu drehen. Während der Abkühlphase, des Stillstandes oder des Anfahrens eines Dampfturbinenrotors muss dieser gedreht werden, damit dieser sich nicht verkrümmt. Die Erfindung schlägt hiermit vor, statt dem hydraulischen Motor eine elektrodynamische Maschine zu verwenden, die den Rotor der Dampfturbine während der Abkühlphase dreht. Unter dem Begriff Turnmotor ist eine elektrodynamische Maschine zu verstehen, die als Motor ausgebildet ist, um den Rotor der Dampfturbine zu drehen. Ein weiterer wesentlicher Gedanke der Erfindung ist es, dass die elektrodynamische Maschine eine zweite wesentliche Funktion aufweist, nämlich, dass diese als Generator zum Erzeugen einer elektrischen Leistung ausgebildet ist. Derartige elektrodynamische Maschinen sind bekannt und werden beispielsweise in Untergrund- oder Straßenbahnen verwendet.

Die elektrodynamische Maschine soll somit als Generator eingesetzt werden, der in der Lage ist eine elektrische Leistung zu erzeugen. An diesem Generator muss lediglich ein elektrischer Verbraucher angekoppelt werden, was dazu führt, dass eine Last an der Dampfturbine entsteht. Die Dampfturbine erfährt somit einen höheren Widerstand, was dazu führt, dass die Dampfturbine mit einem Dampf mit hoher Temperatur beaufschlagt werden kann. Eine Gefahr von zu hohen Temperaturen an der Hochdruck-Teilturbine ist somit nahezu minimiert. Eine Aufwärmphase bzw. Anwärmphase der Dampfturbine wird somit wirksam verkürzt.

Vorteilhafte Weiterbildungen der Erfindung sind in den Unteransprüchen angegeben.

So ist es vorteilhaft, wenn die elektrodynamische Maschine als Asynchronmotor ausgebildet ist. Ein Asynchronmotor ist im Stand der Technik bekannt und geradezu idealerweise einsetzbar, um einerseits als Motor zum Drehen des Rotors der Dampfturbine zu dienen und andererseits als Generator zum Erzeugen einer elektrischen Leistung. Der Asynchronmotor muss eine Mindestleistung aufweisen, damit der vergleichsweise schwere Rotor einer Dampfturbine gedreht werden kann.

Vorteilhafterweise kann der Frequenzumrichter an ein elektrisches Netz angekoppelt werden, um elektrische Leistung ins Netz abzugeben.

Erfindungsgemäß wird somit die Möglichkeit geschaffen, während des Anwärmens der Dampfturbine Drehzahlsperrbereiche besser einhalten zu können bzw. größere Abstände von potentiell gefährlichen Eigenfrequenzen zu halten. Außerdem kann dadurch der Betriebsbereich erweitert werden, wobei die Abdampftemperatur sinkt. Ein weiterer Vorteil der Erfindung ist, dass ein großer Teil an überschüssiger Energie, der bisher ungenutzt blieb, durch Umwandlung in elektrische Energie genutzt werden kann.

Die auf das Verfahren hin gerichtete Aufgabe wird durch ein Verfahren zum Betreiben einer Dampfturbine gelöst, wobei die Dampfturbine mit einer elektrodynamischen Maschine gekoppelt ist, wobei die elektrodynamische Maschine während einer Aufwärmphase der Dampfturbine als Generator und während einer Abkühlphase als Turnmotor betrieben wird. Wesentliches Merkmal hierbei ist wiederum, dass die elektrodynamische Maschine im Wesentlichen zwei Funktionen aufweist. Weitere vorteilhafte Weiterbildungen sind in den Unteransprüchen angegeben.

Die sich zu dem Verfahren ergebenden Vorteile sind den zu der Anlage beschriebenen Vorteile im Wesentlichen gleich.

Ausführungsbeispiele der Erfindung werden nachfolgend anhand der Zeichnung beschrieben. Diese soll das Ausführungsbeispiel nicht maßstäblich darstellen, vielmehr ist die Zeichnung, wozu Erläuterungen dienen, in schematischer und/oder leicht versetzter Form ausgeführt. Im Hinblick auf Ergänzungen der aus der Zeichnung unmittelbar erkennbaren Lehren wird auf den einschlägigen Stand der Technik verwiesen.

Es zeigt:

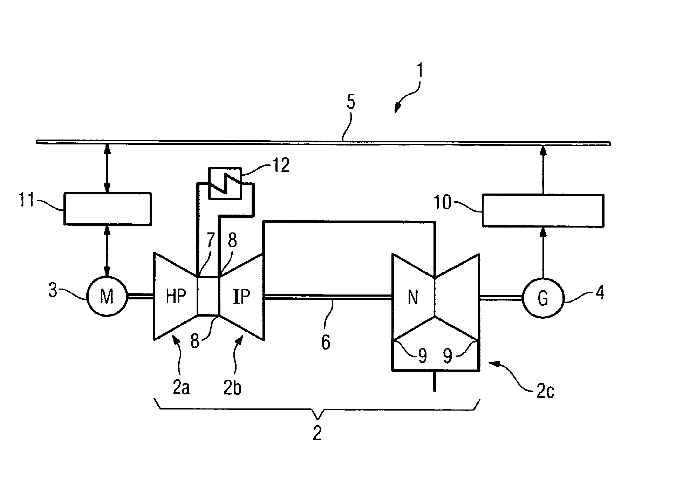

- Figur 1: eine schematische Übersicht einer Anlage.

Die Figur 1 zeigt in schematischer Weise eine Anlage 1, umfassend eine Dampfturbine 2, wobei die Dampfturbine 2 eine Hochdruck-Teilturbine 2a, eine Mitteldruck-Teilturbine 2b und eine Niederdruck-Teilturbine 2c umfasst. Die Anlage 1 umfasst des Weiteren eine elektrodynamische Maschine 3.

Die Hochdruck-Teilturbine 2a umfasst einen Ausgang 7, der strömungstechnisch mit einem Zwischenüberhitzer 12 verbunden ist. Im Zwischenüberhitzer 12 wird der ausströmende Dampf erhitzt und anschließend der Mitteldruck-Teilturbine 2b zugeführt.

Die elektrodynamische Maschine 3 ist mit einem nicht näher dargestellten Rotor der Dampfturbine 2 drehmomentübertragend gekoppelt. An die Dampfturbine 2 ist außerdem ein Generator 4 gekoppelt. Der Generator 4 ist ein elektrischer Generator mit ausreichend großer elektrischer Ausgangsleistung, die für die Einspeisung in ein elektrisches Versorgungsnetz 5 erforderlich ist. Die elektrodynamische Maschine 3, die Dampfturbine 2 und der Generator 4 sind über eine Welle 6 drehmomentübertragend miteinander gekoppelt. Zwischen der elektrodynamischen Maschine 3, der Dampfturbine 2 und/oder dem Generator 4 können in alternativen Ausführungsformen Kupplungen angeordnet sein, um diese Komponenten voneinander entkoppeln zu können.

In der Regel ist nach einem Ausgang 7 der Hochdruck-Teilturbine 2a eine Zwischenüberhitzungseinheit angeordnet, die den aus der Hochdruck-Teilturbine 2a ausströmenden Dampf erhitzt und der erhitzte Dampf in einen Eingang 8 der Mitteldruck-Teilturbine 2b einströmt. An einem Ausgang 9 der Niederdruck-Teilturbine 2c ist in der Regel ein nicht näher dargestellter Kondensator angekoppelt.

Zwischen dem Generator 4 und dem elektrischen Versorgungsnetz 5 ist ein Haupt-Transformator 10 angeordnet.

Die elektrodynamische Maschine 3 wird während einer Anwärmphase der Dampfturbine 2 bis zum Erreichen einer Mindestlast von z. B. 5% bis 10% Nennleistung als Generator betrieben. Dazu wird die elektrodynamische Maschine 3 an einen Frequenzumrichter 11 angekoppelt, der eine am Ausgang der elektrodynamischen Maschine 3 anliegende Frequenz in eine passende Frequenz umwandelt. Die passende Frequenz ergibt sich aus der Netzfrequenz des elektrischen Versorgungsnetzes 5 und liegt üblicherweise bei 50Hz bzw. 60Hz.

Die elektrodynamische Maschine 3 wird hierbei als ein Asynchronmotor ausgebildet. Während einer Abkühlphase, d.h. während einer Phase, in der in die Dampfturbine 2 kein oder nur kaum Dampf einströmt, wird die elektrodynamische Maschine 3 als ein Turnmotor betrieben. Dazu muss die als Turnmotor ausgebildete elektrodynamische Maschine 3 mit einer elektrischen Spannung versorgt werden. Die als Turnmotor ausgebildete elektrodynamische Maschine 3 muss eine entsprechende Leistung aufweisen, um den vergleichsweise schweren Rotor der Dampfturbine 2 drehen zu können. Die Leistung der als Turnmotor ausgebildeten elektrodynamischen Maschine 3 sollte daher im Megawattbereich liegen.

In einer alternativen Ausführungsform kann die elektrodynamische Maschine 3 statt an den Frequenzumrichter 11 direkt an einen elektrischen Verbraucher, beispielsweise einer Bremswiderstandsbatterie, angekoppelt werden. Die von der elektrodynamischen Maschine 3 erzeugte elektrische Leistung wird dann sozusagen in den Bremswiderstandsbatterien verbrannt, d.h. die elektrische Energie wird in Wärmeenergie umgewandelt.

## Patentansprüche

1. Anlage (1),
umfassend eine Dampfturbine (2) und eine elektrodynamische Maschine (3),
wobei die elektrodynamische Maschine (3) als Turnmotor zum Drehen des Rotors der Dampfturbine (2) und als Generator zum Erzeugen einer elektrischen Leistung ausgebildet ist, **gekennzeichnet durch**
einen Frequenzumrichter (11), der an der elektrodynamischen Maschine (3) angekoppelt ist sowie
einer Bremswiderstandsbatterie,
wobei der Frequenzumrichter (11) an die Bremswiderstandsbatterie angekoppelt ist.

2. Anlage (1) nach Anspruch 1,
wobei die elektrodynamische Maschine (3) als Asynchronmotor ausgebildet ist.

3. Anlage (1) nach Anspruch 1 oder 2,
wobei der Frequenzumrichter (11) an ein elektrisches Versorgungsnetz (5) ankoppelbar ist.

4. Verfahren zum Betreiben einer Dampfturbine (2),
wobei die Dampfturbine (2) mit einer elektrodynamischen Maschine (3) gekoppelt ist,
wobei die elektrodynamische Maschine (3) während einer Aufwärmphase der Dampfturbine (2) als Generator betrieben wird und
die elektrodynamische Maschine (3) während einer Abkühlphase als Turnmotor betrieben wird,
**dadurch gekennzeichnet, dass**
die elektrodynamische Maschine (3) während der Aufwärmphase über einen Frequenzumrichter (11) an eine Bremswiderstandsbatterie angeschlossen wird.

5. Verfahren zum Betreiben einer Dampfturbine (2) nach Anspruch 4,
wobei die elektrodynamische Maschine (3) während der Aufwärmphase an einen elektrischen Verbraucher angeschlossen wird.

6. Verfahren nach Anspruche 4 oder 5,
wobei als elektrodynamische Maschine (3) ein AsynchronMotor-Generator verwendet wird.

## Claims

1. System (1)
comprising a steam turbine (2) and an electrodynamic machine (3),
wherein the electrodynamic machine (3) is designed as a turning motor for turning the rotor of the steam turbine (2) and as a generator for generating an electrical power,
**characterized by**
a frequency converter (11) which is coupled to the electrodynamic machine (3), and also
a braking resistor battery,
wherein the frequency converter (11) is coupled to the braking resistor battery.

2. System (1) according to Claim 1,
wherein the electrodynamic machine (3) is designed as an asynchronous motor.

3. System (1) according to Claim 1 or 2,
wherein the frequency converter (11) can be coupled to an electrical supply system (5).

4. Method for operating a steam turbine (2),
wherein the steam turbine (2) is coupled to an electrodynamic machine (3),
wherein the electrodynamic machine (3) is operated as a generator during a warm-up phase of the steam turbine (2), and the electrodynamic machine (3) is operated as a turning motor during a cooling-down phase,
**characterized in that**
the electrodynamic machine (3) is connected to a braking resistor battery by means of a frequency converter (11) during the warm-up phase.

5. Method for operating a steam turbine (2) according to Claim 4,
wherein the electrodynamic machine (3) is connected to an electrical load during the warm-up phase.

6. Method according to Claim 4 or 5,
wherein the electrodynamic machine (3) used is an asynchronous motor/generator.

## Revendications

1. Installation ( 1 ),
comprenant une turbine ( 2 ) à vapeur et une machine ( 3 ) électrodynamique,
la machine ( 3 ) électrodynamique étant constituée sous la forme d'un moteur turn pour la rotation du rotor de la turbine ( 2 ) à vapeur et comme génératrice pour la production d'une puissance électrique,
**caractérisée par**
un convertisseur ( 11 ) de fréquence, qui est accouplé à la machine ( 3 ) électrodynamique, ainsi que par une batterie de résistance de frein,
dans laquelle le convertisseur ( 11 ) de fréquence est accouplé à la batterie de résistance de frein.

2. Installation ( 1 ) suivant la revendication 1,
dans laquelle la machine ( 3 ) électrodynamique est constituée sous la forme d'un moteur asynchrone.

3. Installation ( 1 ) suivant la revendication 1 ou 2,
dans laquelle le convertisseur ( 11 ) de fréquence peut être accouplé à un réseau ( 5 ) d'alimentation électrique.

4. Procédé pour faire fonctionner une turbine ( 2 ) à vapeur,
dans lequel la turbine ( 2 ) à vapeur est accouplée à une machine ( 3 ) électrodynamique,
dans lequel on fait fonctionner la machine ( 3 ) électrodynamique comme génératrice pendant une phase d'échauffement de la turbine ( 2 ) à vapeur et
on fait fonctionner la machine ( 3 ) électrodynamique comme moteur turn pendant une phase de refroidissement,
**caractérisé en ce que**
on raccorde la machine ( 3 ) électrodynamique pendant la phase d'échauffement par un convertisseur ( 11 ) de fréquence à une batterie de résistance de frein.

5. Procédé pour faire fonctionner une turbine ( 2 ) à vapeur suivant la revendication 4,
dans lequel on raccorde la machine ( 3 ) électrodynamique pendant la phase d'échauffement à un consommateur électrique.

6. Procédé suivant la revendication 4 ou 5,
dans lequel on utilise comme machine ( 3 ) électrodynamique un moteur génératrice asynchrone.
